# EUROPÄISCHE PATENTSCHRIFT

(11) **EP 3 009 001 B1**
(45) Veröffentlichungstag und Bekanntmachung des Hinweises auf die Patenterteilung: **05.05.2021**
(21) Anmeldenummer: 15002955.1
(22) Anmeldetag: 16.10.2015
(51) Int. Cl.: A23L 21/15, A23L 19/00, A23L 33/21, A21D 13/38, A23G 3/34

(54) **NAHRUNGSMITTELZUSAMMENSETZUNG FÜR EIN NAHRUNGSMITTEL MIT GELARTIGEN EIGENSCHAFTEN**
FOOD COMPOSITION FOR A FOOD PRODUCT WITH GEL-LIKE PROPERTIES
COMPOSITION DE PRODUITS D'ALIMENTATION POUR UN PRODUIT D'ALIMENTATION AYANT DES PROPRIETES SEMBLABLES A CELLES DU GEL

(30) Priorität: 16.10.2014 DE 102014015214
(43) Veröffentlichungstag der Anmeldung: 20.04.2016
(73) Patentinhaber: Griesson - de Beukelaer GmbH & Co. KG, 56751 Polch (DE)
(72) Erfinder: Schnell, Anja, 56751 Polch (DE); Hajji, Fuad, 56070 Koblenz (DE); Fabian, Jürgen, 56073 Koblenz (DE)
(74) Vertreter: Hannke, Christian

(56) Entgegenhaltungen:
- EP-A1- 2 336 191
- EP-A1- 2 668 850
- WO-A1-01/97631
- WO-A1-96/32852
- WO-A2-2007/121402
- CH-B1- 698 518
- DE-T2- 60 215 954
- DE-T2- 60 319 579
- DE-T2- 69 310 613
- "PIM's L'original orange - Lu - 150g", , 4 March 2013 (2013-03-04), Retrieved from the Internet: URL:https://world.openfoodfacts.org/produc t/5410041005707/pim-s-l-original-orange-lu [retrieved on 2020-01-28]
- "PIM's Fraise touche de Fraise des Bois - LU - 150g", , 25 April 2013 (2013-04-25), Retrieved from the Internet: URL:https://world.openfoodfacts.org/produc t/5410041376609/pim-s-fraise-touche-de-fra ise-des-bois-lu [retrieved on 2020-01-28]
- "Pim's Framboise - Lu - 150g", , 11 April 2012 (2012-04-11), Retrieved from the Internet: URL:https://world.openfoodfacts.org/produc t/5410041040807/pim-s-framboise-lu [retrieved on 2020-01-28]
- D. Hadziyev ET AL: "Dehydrated Mashed Potatoes-Chemical and Biochemical Aspects" In: "Advances in food research", 1 January 1979 (1979-01-01), Academic Press, New York, US, XP055754278, ISSN: 0065-2628 vol. 25, pages 55-136, DOI: 10.1016/S0065-2628(08)60235-9,

## Beschreibung

Die vorliegende Erfindung betrifft ein Nahrungsmittel mit gelartigen Eigenschaften und ein Verfahren zur Herstellung eines Nahrungsmittels mit gelartigen Eigenschaften aus einer Nahrungsmittelzusammensetzung. Sie betrifft ferner eine Backware und die Verwendung eines Nahrungsmittels mit gelartigen Eigenschaften für diese Backware.

Aus dem bekannten Stand der Technik sind Nahrungsmittelzusammensetzungen aus dem insbesondere aromatisierten Süßwaren- und Gebäckwarenbereich bekannt, welche im abgebundenen Zustand, das heißt im gelierten Zustand, eine feste, gelartige Konsistenz aufweisen. Derart bekannte Zusammensetzungen sind insbesondere bei dem Verzehr häufig nachteilig, da sie einen künstlichen, gummiartigen Biss aufweisen und somit als nicht unangenehm beim Kauen und Schlucken empfunden werden.

Die internationale Patentanmeldung WO 2003/061406 A1 offenbart eine Fruchtfüllung für einen Ernährungsriegel. Als Bestandteile werden insbesondere die Süßungsmittel Zucker oder Saccharose, Fructosesirup, Fruchtflüssigkeit, Pektin als Geliermittel, Wasser und Citronensäure genannt. Weiterhin werden zerkleinerte Früchte genannt. Es werden Anteile von diätetischen Fasern erwähnt, die in den zerkleinerten Früchten oder einer Getreideschicht des Riegels vorkommen können. Auch wird ein Herstellungsverfahren beschrieben.

Die US-amerikanische Patentschrift US 2 459 431 offenbart ein Verfahren zur Herstellung eines Fruchtgelees ohne Aufheizen. In Fruchtgelees sind Pflanzenfasern in gebundener, nicht isolierter Form enthalten.

Die deutsche Patentanmeldung DE 2420622 A1 offenbart eine Grundmasse für kalt anrührbare Nahrungsmittelüberzug- und Nahrungsmitteleinbettungsmaßnahmen, insbesondere für Kuchen.

Die Druckschriften EP 2668850 A1, CH 698518 B1, WO 9632852 A1, WO 2007121402 A2, DE 60215954 T2, DE 69310613 T2 sowie WO 0197631 A1 zeigen weitere Nahrungsmittelzusammensetzungen.

Der folgenden Erfindung liegt die Aufgabe zugrunde, eine Nahrungsmittelzusammensetzung zur Herstellung eines Nahrungsmittels bereitzustellen, welche für den Konsumenten einen gefälligen Geschmack und Mundgefühleigenschaften und welche zugleich gut handhabbar, lagerbar und mit weiteren Lebensmitteln kombinierbar ist.

Diese Aufgabe wird gemäß den Merkmalen des Patentanspruches 1 gelöst. Vorteilhafte Ausgestaltungen der Erfindung sind Gegenstand der Unteransprüche und nebengeordneten Ansprüche.

Die Erfindung betrifft ein Nahrungsmittel nach Anspruch 1 mit gelartigen Eigenschaften aus zumindest einer Nahrungsmittelzusammetzung. Darunter fallen Nahrungsmittel, die zumindest teilweise einige Struktur ausgebildet haben oder selbst Gele sind und auch Nahrungsmittel, die keine Gele sind, aber zumindest manche typische und für Nahrungsmittel wesentliche Eigenschaften eines Gels aufweisen. Ein Gel, beispielsweise Gelatine, ist nach allgemeiner Definition ein disperses System, das aus mindestens zwei Komponenten besteht. Die feste Komponente bildet dabei ein schwammartiges, dreidimensionales Netzwerk aus Gelbrücken, dessen Poren durch eine Flüssigkeit (Lyogel) oder ein Gas (Xerogel) ausgefüllt sind. Die flüssige Komponente ist dadurch in der festen immobilisiert. Ist das Netzwerk hochporös und Luft das eingelagerte Gas, so wird das Gel auch als Aerogel bezeichnet. Beide Komponenten durchdringen sich dabei vollständig (bikohärent). Für Nahrungsmittel relevante gelartige Eigenschaften sind eine weiche, flexible Konsistenz, ein geringer Schmelzpunkt insbesondere bei Mundtemperatur, einer hinreichende Festigkeit und Klebewirkung, um andere Lebensmittel miteinander zu verbinden und einen im Vergleich zu Backware hohen Flüssigkeitsgehalt insbesondere in der Mundwahrnehmung.

Die Nahrungsmittelzusammensetzung umfasst wenigstens folgende Rohstoffe, welche zu einem Nahrungsmittel mit gelartigen Eigenschaften verarbeitet werden können: ein, zwei oder mehr Lösungsmittel, ein, zwei oder mehr Hydrokolloid und wenigstens eine, zwei oder mehrere Pflanzenfasern. Das Lösungsmittel kann zumindest teilweise separat von Hydrokolloiden und Pflanzenfasern bereitgestellt werden. Die wenigstens eine Pflanzenfaser wird erfindungsgemäß als Einzelzutat der Nahrungsmittelzusammensetzung bereitgestellt. Um eine Pflanzenfaser als Einzelzutat bereitzustellen, ist sie aus ihrer üblichen Umgebung, wie zum Beispiel Fruchtmus oder Marmelade zu isolieren. Der Vorteil von der Art isolierten Pflanzenfasern ist, dass die für die Bildung einer Gelstruktur oder einer gelartigen Struktur notwendigen Parameter, wie zum Beispiel der Quellgrad mit Lösungsmittel, besser eingestellt werden kann. Viele Pflanzenfasern bilden an sich keine Gelstruktur aus, können in einem gequollenen Zustand, in einer gelartigen Matrix eingebettet sein und dadurch beispielsweise die Festigkeit des Nahrungsmittels erhöhen, so dass das Mundgefühl über das stöchiometrische Verhältnis von Pflanzenfasern zu anderen Rohstoffen, insbesondere Hydrokolloiden, einstellbar ist. Bevorzugt sind Pflanzenfasern ausgewählt, die eine Synärese aus dem Nahrungsmittel mit gelartigen Eigenschaften unterbindet oder zumindest hemmt. Für die Erzielung einer bestimmten gelartigen Struktur in einem Nahrungsmittel sind daher wasserunlösliche Pflanzenfasern notwendig. Eine derart effiziente Gelbildung ist deshalb vorteilhaft, weil ein hoher Anteil an Pflanzenfasern im Nahrungsmittel für den Verbraucher unangenehme Mundeigenschaften zur Folge haben kann, weil das Nahrungsmittel beispielsweise weniger weich beziehungsweise "soft" und weniger saftig schmeckt. In analoger Weise können auch die Hydrokolloide als Einzelzutat bereitgestellt werden. Isolierte Pflanzenfasern haben den weiteren Vorteil, dass sie unabhängig von bei Stoffen der Ursprungspflanze sind, die eventuell einen unerwünschten Eigengeschmack oder erträgliche Eigenschaften zum Beispiel bei der Verwendung haben. Wie können Pflanzenfasern als Einzelzutat isoliert werden? Pflanzenfasern als Einzelzutat werden durch folgende Verfahren isoliert: Feststoffextraktion mittels eines Lösungsmittels (z.B. Ethanol oder eines Wassers) mit anschließender Trocknung, Extraktion unter Verwendung einer Säure mit anschließender Trocknung oder ultraschallgestütze Extraktion mit anschließender Trocknung. Die industrielle Nutzung von Pflanzenfasern als Einzelzutat erlaubt die Einhaltung und die Kontrolle der gewünschten Produktqualität, die gezielte Einstellung der Eigenschaften (Quellzustand) und somit die langfristige Gewährleitung der sensorischen Merkmale (z.B. ein "Mundgefühl").

Insbesondere kann wenigstens ein Hydrokolloid und/oder wenigstens eine in natürlicher Form vorliegen. Zwar können sie beispielsweise isoliert werden, liegen aber in ihrer chemischen und physikalischen Struktur so vor, wie sie in Obst oder Gemüse enthalten sind. Beispiele für Hydrokolloide wie Polysacharide oder Proteine aus der Natur sind: Aus Landpflanzen gewonnene Hydrokolloide sind zum Beispiel Pektine, Stärke, Gummi Arabicum, Galactomannane wie Guarkernmehl oder Johannisbrotkernmehl. Aus Algen gewonnene Hydrokolloide sind beispielsweise Agar, Carrageen oder Alginate. Tierische Hydrokolloide sind beispielsweise Gelatine oder Caseinate. Hydrokolloide bakterieller Herkunft sind beispielsweise Xanthan, Gellan oder Scleroglucan.

Wenigstens ein Hydrokolloid und/oder wenigstens eine Pflanzenfaser können in modifizierter Form vorliegen. Die Modifizierung kann beispielsweise chemisch, physikalisch oder enzymatisch erfolgen.

Beispiele für chemisch modifizierte Hydrokolloide, beispielsweise unter Verwendung eines Lösungsmittels wie Ammoniak sind amidiertes Pektin, Cellulose-Derivate wie Methylcellulose (MC), Hydroxypropylmethylcellulose (HPMC) oder Stärke- Derivate wie Stärkeether und - ester. Ein Beispiel für physikalisch modifizierte Hydrokolloide, beispielsweise unter Verwendung eines Extruders, ist Hydraxan. Ein Beispiel für enzymatisch modifizierte Hydrokolloide, beispielsweise unter Verwendung einer Lipase (Enzym), sind maleatiertes Guar oder succiniertes Guar.

Ein besonders bevorzugter Ausgangsstoff für natürliche oder modifizierte Hydrokolloide sind zumindest Teile der Bestandteile aus den Samen des Johannisbrotbaumes, der im gemahlenen Zustand auch als Johannesbrotkernmehl bezeichnet wird. Dabei können ausgewählte typische Bestandteile des Johannesbrotkernsamens unabhängig von ihrer rohstofflichen Herkunft aus dem Naturprodukt Johannesbrotsamen, anderen Pflanzen oder einem Syntheseverfahren verwendet werden. Johannesbrotsamen bestehen typischerweise aus etwa 30 % Schale, etwa 25 % Samen und etwa 45 % Endosperm. Das Johannisbrotkernmehl als Hydrokolloid ist manchmal leicht beige und geschmacksneutral. Es umfasst insbesondere ein Polysaccharid, das größtenteils aus Galactose (20 %) und Mannose (80 %) besteht. Dieser Mehrfachzucker kann vom menschlichen Körper nur teilweise verdaut werden und gilt deshalb als diätischer Ballaststoff. Neben dem Polysaccharid sind noch ca. 6 % Eiweißstoffe sowie wasserlösliche Pflanzenfarbstoffe (Flavonoide) und Spuren von Mineralstoffen enthalten. Im Wesentlichen entsprechen die Eigenschaften denen des Guarkernmehls, wobei die Viskosität der Lösungen bei gleicher Konzentration etwas geringer ist. Johannisbrotkernmehl kann zwischen dem 80- und 100-fachen seines Eigengewichts an Wasser binden, ist damit circa fünfmal so quellfähig wie gewöhnliche Stärke, stabilisiert Emulsionen. Weiterhin zeigt es Synergien mit Xanthan, Carrageen und Agar. Ein besonder Vorteil von diesen Bestandteilen des Johannesbrotkernmehls ist, dass es die Synärese, also den Wasseraustritt aus einer Gelphase, zumindest hemmt oder verhindert. Besteht eine Backware zum Beispiel aus einem erfindungsgemäßen Nahrungsmittel in Kontakt zu einem hydrophileren Gebäck, so ist der Wirkmechanismus der Synärese gehemmt oder blockiert, so dass weniger Lösungsmittel wie Wasser vom Nahrungsmittel in das Gebäck übertritt. Der Wasserübergang durch den Wirkmechanismus des osmotischen Drucks bleibt jedoch erhalten. So kann der Feuchtigkeitsgrad des Gebäcks über eine bestimmte Lagerzeit begrenzt werden, so dass da Gebäck eine softe Konsistenz beibehält ohne zu durchnässen oder das Nahrungsmittel auszutrocknen.

Ein Beispiel für modifizierte Pflanzenfasern ist microcrystalline Cellulose (MCC). Die vorteilhaften Eigenschaften von modifizierten Pflanzenfasern gegenüber nicht modifizierten Pflanzenfasern sind beispielsweise: höhere Erreichbarkeitsgrad, beispielsweise höhere Hydratisierbarkeit wegen erhöhter Fähigkeit zur Aufnahme von Lösungsmitteln wie Wasser, Ausbildung einer besseren insbesondere gelartigen texturfettähnliche Konsistenz, keine Erfordernis der Änderung von Prozessparametern, unter anderem keine spezielle Temperaturführung, sodass der Herstellungsprozess flexibler, schneller, kostengünstiger wird und neue Herstellungsverfahren erst durch neu erschlossene Parameterbereiche (wie Temperatur oder Druck) ermöglicht werden.

Hydrokolloide und/oder Pflanzenfasern werden modifiziert, um ihnen insbesondere folgende Eigenschaften zu verleihen: Verleihung von gleichen gelartigen Eigenschaften bei einer Verwendung geringer Konzentrationen an Hydrokolloid/Pflanzenfasern, damit verbundene Kosteneinsparung, Steigerung und Erhaltung der Viskosität über die Lagerzeit, nicht-gelierende Hydrokolloide bilden gelartige Strukturen, Reduzierung von Synärese und/oder Verbesserung der kolloidalen Löslichkeit.

Zur Erzielung und Einstellung von bestimmten gelartigen Eigenschaften kann der Quellgrad mit Lösungsmittel wenigstens eines Hydrokolloides und/oder wenigstens einer Pflanzenfaser auf bevorzugt 8-25 Gewichts-% bezogen auf die jeweilige Trockenmasse jeweils separat vor definiert werden, bevor die Rohstoffe miteinander vermischt werden. Einstellbare Eigenschaften sind beispielsweise die Viskosität oder sensorische Eigenschaften (z.B. Konsistenz und Bissfestigkeit). Der technische Mechanismus dieser Einstellbarkeit durch den Vorquellgrad, bzw. im Falle des Lösungsmittels Wasser Vorhydratisierung, beruht auf dem Wettbewerb von Hydrokolloiden und Pflanzenfasern untereinander und freies Lösungsmittel. Wird beispielsweise ein Hydrokolloid stärker vorhydratisiert als eine Pflanzenfaser der Nahrungsmittelzusammensetzung, so wird durch diesen Vorsprung in der Hydratisierung sich am Ende der Hydratisierungsreaktion des Hydrokolloid stärker hydratisiert sein als ohne Vorhydratisierung, absolut und bezogen auf die relative Hydratisierung der Pflanzenfaser. Zum Beispiel können durch die Vorhydratisierung von Pflanzenfasern in einem Lösungsmittel (wie Wasser) die Eigenschaften des gelartigen Produktes beeinflusst werden, da sich das Hydrokolloid nicht mehr im starken Wettbewerb mit den Pflanzenfasern um das Wasser befindet. Als Resultat der Wechselwirkung zwischen Pflanzenfasern, Hydrokolloiden und Wasser kommt es zur Ausbildung eines Produktes mit spezifischen, gelartigen Eigenschaften.

Die wenigstens eine Pflanzenfaser als rieselfähiges Pulver, dessen Körnung bevorzugt im Bereich von 0,01 µm bis 5 mm ausgebildet ist, vorgesehen und/oder als Paste oder Viskose Lösung bereitgestellt sein. Bevorzugt kann wenigstens eine Pflanzenfaser geschmacks- und/oder geruchsneutral und/oder zusatzstofffrei ausgebildet sein.

In der Erfindung umfasst die Nahrungsmittelzusammensetzung:
a. 15-30 Gewichts-% Lösungsmittel;
b. 0,01 - 12,0 Gewichts-%, bevorzugt 0,1 - 5,0 Gewichts-%, mehr bevorzugt 0,5 -1,0 Gewichts-%, natürliches und/oder modifiziertes Hydrokolloid; und/oder
c. 0,01 - 5,0, bevorzugt im 0,05 - 3,0, Gewichts-% natürliche und/oder modifizierte Pflanzenfaser
bezogen auf die Gesamtmasse der Nahrungsmittelzusammensetzung.

Wenigstens ein Lösungsmittel ist eine wasserhaltige, ölhaltige und/oder alkoholhaltige Flüssigkeit. Wenigstens eine Pflanzenfaser ist aus der Gruppe Obstfasern insbesondere aus Zitrusfrüchten, Gemüsefasern, Getreidefasern und/oder einer Kombination hieraus ausgewähll. Wenigstens ein Hydrokolloid ist ein Polysaccharid, bevorzugt Stärke.

Zusätzlich kann die Nahrungsmittelzusammensetzung wenigstens einen der weiteren Rohstoffe umfassen: wenigstens ein Süßungsmittel, wenigstens einen Sirup, wenigstens eine Fruchtflüssigkeit, wenigstens ein Aroma, wenigstens ein Stückgut, wenigstens eine Säure; und/oder wenigstens ein Salz. Die zusätzlichen Rohstoffe können folgenden Anteil an der Gesamtmasse der Nahrungsmittelzusammensetzung (100 %) haben:
a. 10 - 45 Gewichts-%, bevorzugt 15 - 40 Gewichts-%, meist bevorzugt 25 - 30 Gewichts-%, Süßungsmittel;
b. 30 - 60 Gewichts-%, bevorzugt 35 - 60 Gewichts-%, mehr bevorzugt 40 - 50 Gewichts-%, Sirup;
c. 1,0 - 10 Gewichts-%, bevorzugt 1,0 - 7,0 Gewichts-%, mehr 2,0 - 5,0 Gewichts-%, Fruchtflüssigkeit;
d. 0,01 - 1,5 Gewichts-%, bevorzugt 0,05 Gewichts-%, bis 1,0 Gewichts-%, mehr bevorzugt 0,1 bis 0,3 Gewichts-%, Aroma;
e. 0,01 - 60 Gewichts-%, bevorzugt 0,5 - 40 Gewichts-%, mehr bevorzugt 1,0 - 20 Gewichts-% und meist bevorzugt 5,0 - 10 Gewichts-% Stückgut;
f. 0,1 - 5,0 Gewichts-%, bevorzugt 0,3 - Gewichts-%, mehr bevorzugt 0,5 -1,0 Gewichts-%, Säure und/oder
g. 0,05 - 3,0 Gewichts-%, bevorzugt 0,075 - 2,5 Gewichts-%, noch bevorzugter 0,075 - 1,5 Gewichts-%, noch 1,1 -1,3 Gewichts-% Salz.

Wenigstens ein Süßungsmittel kann aus der Gruppe der Süßstoffe oder Saccharide, bevorzugt Monosaccharide und/oder Disaccharide, mehr bevorzugt Glucose, Saccharose, Fructose, und/oder einer Mischung hieraus ausgewählt sein. Wenigstens ein Sirup kann aus natürlichen und/oder künstlichen Siruparten, bevorzugt Glucose-Fructose-Sirup, Honig, Ahornsirup, Reissirup und/oder eine Mischung hieraus ausgewählt sein. Wenigstens eine Fruchtflüssigkeit kann als Saftkonzentrat, bevorzugt als Obstsaftkonzentrat, mehr bevorzugt Orangensaftkonzentrat, Zitronensaftkonzentrat, Cranberrysaftkonzentrat, Pampelmusensaftkonzentrat, Grapefruitsaftkonzentrat und/oder eine Mischung hieraus ausgewählt sein. Wenigstens ein Aroma kann als synthetisches Aroma und/oder natürliches Aroma ausgewählt sein. Wenigstens ein Stückgut kann bevorzugt als Obststückgut, Getreidestückgut, Gemüsestückgut, kakaohaltiges Stückgut, nusshaltiges Stückgut und/oder zuckerhaltiges Stückgut und/oder einer Mischung hieraus ausgewählt sein. Insbesondere kann wenigstens ein Stückgut frisch, konserviert, eingekocht, getrocknet und/oder gefriergetrocknet sein. Beispielsweise unterscheiden sich gefrorenes, getrocknetes und frisches Obst insbesondere im Wassergehalt bezogen auf die Gesamtmasse des Obstes, so dass der Wassergehalt der Nahrungsmittelzusammensetzung über die Zugabe von gefriergetrocknetem Obst statt frischem Obst oder eine Mischung davon eingestellt werden kann. Der Wassergehalt wiederum beeinflusst die gelartigen Eigenschaften des Nahrungsmittels. Wenigstens eine Säure eine aus der Gruppe der Mono-, Bi- oder Tricarbonsäuren, bevorzugt Citronensäure, ausgewählt sein. Wenigstens ein Hydrokolloid kann ein Polysaccharid, bevorzugt Stärke, sein. Wenigstens eine Pflanzenfaser kann aus der Gruppe Obstfasern insbesondere aus Zitrusfrüchten, Gemüsefasern, Getreidefasern und/oder einer Kombination hieraus ausgewählt sein.

Wenigstens ein Salz kann insbesondere ein Alkali- und/oder Erdalkalisalz. Bevorzugt ist auch ein salzhaltiger Komplex, wie beispielsweise Calcium-Natrium-Tartrat, inbegriffen. Der Vorteil eines solchen Komplexes ist, dass das zur Gelbildung notwendige Anion langsamer freigegeben wird als bei einer einfachen Salzverbindung, so dass die Gelierung verlangsamt werden kann. Dies wiederum ist beispielsweise vorteilhaft, um eine zu hohe temporäre Viskosität bei einem Abfüllvorgang im Herstellungsprozess des Nahrungsmittels zu verhindern. Die Zugabe von bestimmten Salzen wie zum Beispiel Salzen mit Calcium-Kationen kann die Gelierung von manchen Hydrokolloiden, wie beispielsweise Alginat oder Pektin, steuerbar beeinflussen oder sogar überhaupt erst ermöglichen. Besonders vorteilhaft wirkt sich im letzten Fall aus, dass über das stöchiometrische Verhältnis von Salz zu Hydrokolloiden und gegebenenfalls anderer beispielsweise salzbindender Rohstoffe, dass sich eine Gelbrücke nur dort ausbilden kann, wo sich ein gegebenenfalls hydratisiertes (z.B. Calcium-)Kation an das Hydrokolloid anlagert, adsorbiert oder Teil eines chemischen Komplexes wird. So kann die Anzahl der Gelbrücken pro Einheit an Stoffmenge, Volumen oder Gewicht des Hydrokolloids beziehungsweise des gesamten Nahrungsmittels bestimmt werden. Eine höhere Dichte an Gelbrücken korreliert mit einer höheren Viskosität des Nahrungsmittels und bewirkt ein Mundgefühl höherer Bissfestigkeit. Vorteilhaft ist weiterhin, dass angebundenes Salz im Wesentlichen nicht zum Geschmack beiträgt, damit beispielsweise ein süßes Nahrungsmittel nicht zu salzig schmeckt aber trotzdem eine einstellbare Viskosität hat. Ein weiterer Vorteil ist, dass sich über die Zugabe ein geeignetes Salz insbesondere in geeigneter Form (beispielsweise kristallin, vorhydratisiert oder in flüssiger Lösung einer definierten Konzentration) und Menge (insbesondere dem stöchiometrischen Verhältnis zu anderen Rohstoffen der Nahrungsmittelzusammensetzung, wie vornehmlich den Hydrokolloiden aber auch anderen Rohstoffen, die Salzionen binden und so dem Hydrokolloiden zur Gelbrückenbildung entziehen) der Gelierungszeitpunkt definieren lässt. Wird beispielsweise in eine wässrige Nahrungsmittelzusammensetzung ein wenig hydratisiertes Calcium-Salz zugegeben, dissoziieren seine Ionen zunächst, hydratisieren bis zu einem Hydratisierungsgrad, der für die Ingangsetzung der Gelbildung des Hydrokolloids erforderlich ist und setzen so die Gelbildung zeitverzögert in Gang.

Das Nahrungsmittel ist als Nahrungsmittelkissen ausgebildet. Insbesondere kann Nahrungsmittelkissen in einem ersten Bereich eine erste gelartige Struktur und in wenigstens einem weiteren Bereich eine jeweilige weitere gelartige Struktur aufweisen. Vorteilhafterweise ist wenigstens ein beispielsweise flüssigerer, zähflüssiger oder weicherer weiterer Bereich von einem ersten festeren Bereich allseits umschlossen ist, so dass der ersten Bereich als Hülle für den wenigstens einen weiteren Bereich dienen kann. Produktionstechnisch kann dies dadurch bewirkt werden, dass der erste Bereich und der weitere Bereich aus Nahrungsmittelzusammensetzungen bestehen, die thermodynamisch inkompatibel zur Ausbildung einer gemeinsamen gelartigen Struktur sind. Zum Beispiel kann der erste Bereich als Hydrokolloid ein Alginat enthalten und der weitere Bereich als Hydrokolloid Casein oder Caseinat. Neben unterschiedlichen haptischen und mundsensorischen Eigenschaften können sich der erste Bereich und der wenigstens eine weitere Bereich beispielsweise durch Verwendung verschiedener Aromen und Fruchtkonzentrate auch geschmacklich und farblich unterscheiden.

Die Erfindung betrifft ferner ein Verfahren zur Herstellung eines Nahrungsmittels mit gelartigen Eigenschaften aus wenigstens einer Nahrungsmittelzusammensetzung nach einem der Ansprüche 1 bis 9 wenigstens mit den folgenden Schritten:
a. Bereitstellen wenigstens die Rohstoffe zumindest der Nahrungsmittelzusammensetzung;
b. Volumetrisches oder gewichtsmäßiges Abmessen der Rohstoffe;
c. Mischen der Rohstoffe;
d. Temperieren der gemischten Rohstoffe, insbesondere Erhitzen auf eine unterhalb oder oberhalb des Siedepunktes von in der Nahrungsmittelzusammensetzung (1) befindlichem Lösungsmittel (10), und/oder physikalisches Behandeln der gemischten Rohstoffe, insbesondere unter Überatmosphärendruck, vorzugsweise unter Hochdruck, der Rohstoffe und
e. Beenden des Temperierens und/oder des physikalischen Behandelns, so dass sich aus den temperierten und/oder physikalisch behandelten Rohstoffen ein Nahrungsmittel (10) mit gelartigen Eigenschaften ausbildet.

Insbesondere können Temperieren und physikalisches Behandeln Parameterbereiche des P(T)-Diagramms, wobei P der Prozessdruck und T die Prozesstemperatur ist, gewählt werden, bei denen gegenüber dem Stand der Technik der Prozessdruck P hoch gewählt wird und die Prozesstemperatur T entsprechend niedrig gewählt werden kann. Zur Herstellung von Nahrungsmitteln, insbesondere bei der Bildung von gelartigen Eigenschaften, hängen der Prozessdruck P und die Prozesstemperatur T zusammen. Beispielsweise erlaubt ein höherer Prozess P die Erniedrigung der Prozesstemperatur T, die zur Bildung einer bestimmten gelartigen Struktur im Nahrungsmittel nötig ist. Dies ist insbesondere vorteilhaft, weil bei niedrigeren Temperaturen tendenziell schonender für Aromen und Vitamine sind.

Das erfindungsgemäße Verfahren kann Verfahren nach dem Beenden des Temperierens und/oder des physikalischen Behandelns wenigstens einen der folgenden Unterschritte umfassen:
f. Erniedrigen des Drucks, insbesondere auf Atmosphärendruck, bevorzugt auf Unteratmosphärendruck, mehr bevorzugt Vakuumieren;
g. Abkühlen der Rohstoffe;
h. Einfüllen der Rohstoffe in ein Vorratsbehältnis, insbesondere in eine Form oder in ein weiteres, bevorzugt ebenfalls temperiertes und/oder physikalisch behandeltes, Nahrungsmittel mit einer zur Ausbildung einer gemeinsamen gelartigen Struktur inkompatiblen gelartigen Struktur, so dass das Nahrungsmittel vom weiteren Nahrungsmittel zumindest teilweise umhüllt wird.

Die Erfindung betrifft ferner eine Backware mit wenigstens einem erfindungsgemäßen Nahrungsmittel und mit wenigstens einem Gebäck, insbesondere einem Eigebäck. Das Gebäck zeichnet sich vorteilhafterweise durch eine softe und/oder mürbe Konsistenz und/oder einen süßen, gewürzten, aromatisierten und/oder salzigen Geschmack aus. Denkbar ist auch wenigstens ein Überzug. Der wenigstens eine Überzug ist bevorzugt zumindest teilweise fettbasiert, bindemittelbasiert, gewürzbasiert und/oder zuckerbasiert, mehr bevorzugt schokoladenhaltig, nusshaltig und/oder karamellhaltig.

Das Nahrungsmittel der Backware kann von einer Anzahl von Seiten, bevorzugt einer, zwei oder allen Seiten, von wenigstens einem Gebäck und/oder wenigstens einem Überzug umgeben sein.

Die Erfindung betrifft weiterhin die Verwendung eines erfindungsgemäßen Nahrungsmittels zur Haftverbindung von Gebäcken und/oder Überzügen.

Nachfolgend werden beispielhaft besondere Ausführungsformen der Erfindung und ihre Vorteile beschrieben, deren konkrete Merkmalskombination nur beispielhaft angegeben ist. Ein wesentlicher Punkt einer beispielhaften Ausführungsform liegt darin, dass die Nahrungsmittelzusammensetzung, insbesondere als Bestandteil von Backwaren, wenigstens
a. 10 - 45 Gewichts-% Süßungsmittel,
b. 30 - 60 Gewichts-% Sirup,
c. 1-10 Gewichts-% Fruchtflüssigkeit,
d. 0,01 - 5,0 Gewichts-% Geliermittel,
e. 15 - 30 Gewichts-% Wasser,
f. 0,1- 5,0 Gewichts-% Säure,
g. 0,01 - 5,0 Gewichts-% Pflanzenfaser,
bezogen auf die Gesamtmasse der Nahrungsmittelzusammensetzung, umfasst.

Dies ist vorteilhaft, da durch diese besondere Zusammenstellung der oben genannten Einzelzutaten eine Nahrungsmittelzusammensetzung bedingt ist, welche leicht und einfach verarbeitbar ist. Durch Bereitstellung wenigstens von Süßungsmitteln, Säure und Geliermittel besteht die Möglichkeit, dass die Nahrungsmittelzusammensetzung abbindet und so zumindest teilweise ein dreidimensionales Gelnetzwerk ausbildet. Im abgebundenen Zustand ist die Nahrungsmittelzusammensetzung elastisch abbeißbar. Darüber hinaus ist die Nahrungsmittelzusammensetzung im abgebundenen Zustand formstabil, so dass kein ungewolltes Auseinanderfließen erfolgt.

Darüber hinaus ist die Nahrungsmittelzusammensetzung vorteilhaft, da sie beim Konsum im abgebundenen, also im gelierten Zustand, ein angenehmes, mousseartiges Mundgefühl vermittelt, so dass der Konsument eher an ein weiches Mousse erinnert wird, welches zart auf der Zunge zerfließt und einen starken Fruchteindruck hinterlässt.

Vorteilhafterweise umfasst die Nahrungsmittelzusammensetzung hierbei im abgebundenen Zustand ein zumindest teilweise unterbrochenes Gelnetzwerk. Dies ist insbesondere durch die Zugabe der Pflanzenfaser bedingt, welche aufgrund ihrer Form und Größe die Ausbildung eines durchgängigen, dreidimensionalen Gelnetzwerkes unterbindet. Bevorzugt ist gerade so viel Pflanzenfaseranteil vorgesehen, dass das Geliermittel mit Säure und Süßungsmittel chemisch reagiert und ein zumindest teilweise unterbrochenes, aber dennoch stabiles, insbesondere formstabiles, Gelnetzwerk ausbildbar ist. Dieses ist durch den beigemengten Pflanzenfaseranteil zumindest teilweise unterbrochen ausgebildet, so dass der glatte, glasige, gummiartige Biss verschwindet und stattdessen eine weiche, zarte und fließende Konsistenz ermöglicht wird.

Bei einer weiteren vorteilhaften Ausführungsform umfasst die Nahrungsmittelzusammensetzung einen Pflanzenfaseranteil im Bereich von 0,05 - 3 Gewichts-%, bevorzugt im Bereich von 0,1 - 0,3 Gewichts-%, bezogen auf die Gesamtmasse der Nahrungsmittelzusammensetzung, wobei die Pflanzenfaser aus der Gruppe der Obstfasern, Gemüsefasern, Getreidefasern und/oder einer Kombination hieraus ausgewählt ist. Die Zugabe des Pflanzenfaseranteils, bevorzugt in einem Bereich von 0,1 - 0,3 Gewichts-%, bezogen auf die Gesamtmasse der Nahrungsmittelzusammensetzung, erweist sich als vorteilhaft, da dieser Anteil einerseits ausreichend ist, die im abgebundenen Zustand ausgebildete Gelstruktur zumindest teilweise zu unterbrechen, aber andererseits dennoch deren Formstabilität zu bedingen. Werden beispielsweise Pflanzenfaseranteile von > 15 Gewichts-%, bezogen auf die Gesamtmasse der Nahrungsmittelzusammensetzung, verwendet, so ist dies derart nachteilig, dass die Nahrungsmittelzusammensetzung nicht mehr abbinden, also gelieren, kann, sodass kein Gelnetzwerk mehr ausbildbar ist und die Nahrungsmittelzusammensetzung immer in einem flüssigen bzw. pastösen Zustand verbleibt. Wird hingegen ein Pflanzenfaseranteil von < 0,01 % eingesetzt, so ist dieser Anteil zu gering, um das Gelnetzwerk im abgebundenen Zustand zumindest teilweise zu unterbrechen.

Bevorzugt ist die Pflanzenfaser aus der Gruppe der Obstfasern, Gemüsefasern, Getreidefasern und/oder einer Kombination hieraus ausgewählt. Hierbei bezieht sich die Pflanzenfaser bevorzugt auf Ballaststoffe, also unverdauliche Bestandteile, von Obst, Gemüse und Getreide. Im einfachsten Fall ist die Pflanzenfaser als rieselfähiges Pulver, dessen Körnung bevorzugt im Bereich von 0,01 µm bis 5 mm ausgebildet ist, vorgesehen, da sich dieses leicht mit den weiteren Einzelzutaten vermengen und vermischen lässt, sodass sich eine einfache und schnelle Verarbeitbarkeit der Nahrungsmittelzusammensetzung ergibt. Darüber hinaus ist auch denkbar, die Pflanzenfaser als Paste- oder als viskose Lösung bereitzustellen. Insbesondere ist vorliegend unter Pflanzenfaser eine Vielzahl von Pflanzenfasern einer Pflanzenfaserart zu verstehen. Selbstverständlich ist die Beimengung nicht nur auf eine Pflanzenfaser beschränkt, sondern es ist auch denkbar, der Nahrungsmittelzusammensetzung zwei oder mehrere Pflanzenfaserarten beizumengen.

Bei einer weiteren vorteilhaften Ausführungsform ist die Pflanzenfaser geschmacks- und/oder geruchsneutral und/oder zusatzstofffrei ausgebildet. Dies ist insbesondere von Vorteil, da die Pflanzenfaser als eine Füllzutat ausgebildet ist, welche eigengeschmacksneutral und/oder eigengeruchsneutral ausgebildet ist. Dies ist vorteilhaft, da durch die Zugabe der Pflanzenfaser der Eigengeschmack sowie der Eigengeruch der Nahrungsmittelzusammensetzung nicht beeinträchtigt oder gar verfälscht werden. Darüber hinaus ist es von Vorteil, dass die Pflanzenfaser zusatzstofffrei ausgebildet ist. Dies ist insbesondere für Allergiker von Vorteil, da die Pflanzenfaser bevorzugt eine natürliche, unbehandelte Einzelzutat der Nahrungsmittelzusammensetzung darstellt und frei von chemischen Konservierungsmitteln oder Pflanzenschutzmitteln ist.

Bei einer weiteren vorteilhaften Ausführungsform ist die Pflanzenfaser bevorzugt aus Zitrusfrüchten, meist bevorzugt aus deren Schlauchkanälen oder Mesokarp, hergestellt. Dies ist vorteilhaft, da Zitrusfrüchte einen hohen Anteil an Pflanzenfasern in den Schlauchkanälen und dem Mesokarp aufweisen. Zudem lassen sich die Pflanzenfasern aus besagten Teilen der Zitrusfrüchte, beispielsweise Zitronen, Orangen, Grapefruits, leicht und einfach herstellen.

Bei einer weiteren vorteilhaften Ausführungsform ist das Süßungsmittel bevorzugt im Bereich von 15-40 Gewichts-%, meist bevorzugt im Bereich von 25 - 30 Gewichts-%, bezogen auf die Gesamtmasse der Nahrungsmittelzusammensetzung, ausgewählt, wobei als Süßungsmittel bevorzugt Saccharide, mehr bevorzugt Monosaccharide und/oder Disaccharide und/oder Polysaccharide, meist bevorzugt Glucose, Saccharose, Fructose, Invertzucker und/oder einer Mischung hieraus, ausgewählt sind. Der Anteil des Süßungsmittels im Bereich von 15-40 Gewichts-%, meist bevorzugt im Bereich von 25 - 30 Gewichts-%, ist derart vorteilhaft, da hierdurch die Nahrungsmittelzusammensetzung ihren süßen Geschmack erhält. Zudem ist das Süßungsmittel notwendig, um in Zusammenwirkung mit Geliermittel und Säure abzubinden. Somit ist die Nahrungsmittelzusammensetzung von einem ursprünglich flüssigen Zustand in einen gelartigen Zustand überführbar. Bevorzugt eignen sich hierbei Saccharide, da diese einfach und schnell die Entstehung eines gelartigen Netzwerks unterstützen.

Die Süßungsmittel können sowohl in fester, flüssiger oder auch pastöser Form eingesetzt werden.

Neben den aufgezählten Süßungsmitteln sind darüber hinaus auch Zuckerersatzstoffe und/oder Zuckeraustauschstoffe denkbar. Unter Zuckeraustauschstoffen sind hierbei bevorzugt süß schmeckende Kohlehydrate zu verstehen, welche sich besonders vorteilhaft bei der Diabetikerernährung erweisen. Bevorzugt werden Zuckeralkohole, wie beispielsweise Sorbit, Mannit, Isomalt, Maltit, Erythrit, Xylit, Laktit oder Maltitol-Sirup verwendet.

Ferner ist auch denkbar, der Nahrungsmittelzusammensetzung Süßstoffe als Süßungsmittel beizumengen. Bei Süßstoffen handelt es sich vorliegend um synthetisch hergestellte und/oder natürliche Ersatzstoffe für Zucker mit einer wesentlichen stärkeren Süßkraft. Beispiele für derartige Süßstoffe sind Acesulfam, Aspartam, Cyclamat, Sukralose, Steviosid oder dergleichen. Insbesondere Steviosid erweist sich als vorteilhaft, da dieses eine wesentlich höhere Süßkraft bedingt als herkömmlicher Haushaltszucker und zugleich eine zahnschonende Wirkung hat.

Bei einer weiteren vorteilhaften Ausführungsform ist der Sirup bevorzugt im Bereich von 35 - 60 Gewichts-%, mehr bevorzugt im Bereich von 40 - 50 Gewichts-%, bezogen auf die Gesamtmasse der Nahrungsmittelzusammensetzung, auswählbar, wobei als Sirup natürliche und/oder künstliche Siruparten verwendbar sind, wobei bevorzugt Glucosesirup, Fructosesirup, Glucose-Fructose-Sirup, Honig, Ahornsirup, Reissirup und/oder eine Mischung hieraus auswählbar sind. Als Sirup ist hierbei eine dickflüssige, konzentrierte Lösung zu verstehen, welche eine hohe Süßkraft aufweist. Der vorliegend verwendete Sirup in der Nahrungsmittelzusammensetzung wird bevorzugt aus der Gruppe Obstsirup, Zuckersirup, Zuckerrübensirup, Agavensirup, Ahornsirup, Dinkelsirup, Reissirup, Weizensirup, Maissirup, Kartoffelsirup und/oder einer Mischung hieraus ausgewählt, wobei meist bevorzugt eine Mischung aus Glucose-Fructose-Sirup eingesetzt wird. Je nach Süßkraft der verwendeten Siruparten ist deren Gewichtsanteil an der Nahrungsmittelzusammensetzung variabel ausgebildet. Darüber hinaus sind auch natürliche Siruparten, wie beispielsweise Ahornsirup oder Honig oder auch als Sirup verarbeitete Lösungen, wie beispielsweise Dicksaft, verwendbar.

Bei einer weiteren vorteilhaften Ausführungsform ist die Fruchtflüssigkeit in einem Bereich von 1-7 Gewichts-%, mehr bevorzugt in einem Bereich von 2-5 Gewichts-%, bezogen auf die Gesamtmasse der Nahrungsmittelzusammensetzung auswählbar, wobei als Fruchtflüssigkeit bevorzugt Obstsaftkonzentrat, meist bevorzugt Orangensaftkonzentrat, Zitronensaftkonzentrat, Cranberriesaftkonzentrat, Pampelmusensaftkonzentrat, Grapefruitsaftkonzentrat, Blutorangensaftkonzentrat und/oder eine Mischung hieraus auswählbar ist. Die Zugabe eines Saftkonzentrates als Fruchtflüssigkeit ist dahingehend vorteilhaft, da ein Saftkonzentrat einen wesentlich intensiveren Saftgeschmack aufweist und so bereits durch geringe Zugabemengen ein deutlicher Fruchtgeschmack mit einem gewissen Säuregrad bedingt wird. Selbstverständlich ist vorliegend die Verwendung von Saftkonzentrat als Einzelzutat nicht als beschränkend zu verstehen, sondern es ist auch denkbar, anstelle des Saftkonzentrates, beispielsweise Direktsaft, Nektar oder auch Fruchtmark einzusetzen.

Als Obstsaftkonzentrat werden neben Saftkonzentraten aus Zitrusfrüchten auch Saftkonzentrate aus Steinobst, wie beispielsweise Kirsche, oder auch aus Kernobst, wie beispielsweise Apfel oder Birne, verwendet. Darüber hinaus sind auch Saftkonzentrate aus Beerenobst, bevorzugt Johannisbeere, Himbeere oder Cranberrie, einsetzbar.

Je nach Geschmacksziel sind auch Mischungen unterschiedlicher Fruchtflüssigkeiten denkbar, beispielsweise Mischungen wie Kirsch-Banane, Mango-Orange oder Johannisbeer-Traube.

Bei einer weiteren vorteilhaften Ausführungsform ist das Geliermittel bevorzugt in einem Bereich von 0,1 - 2,0 Gewichts-%, mehr bevorzugt in einem Bereich von 0,5 - 1,0 Gewichts-%, bezogen auf die Gesamtmasse der Nahrungsmittelzusammensetzung, ausgewählt, wobei als Geliermittel wenigstens ein Polysaccharid ausgewählt ist. Die Zugabe von Geliermittel bei der Nahrungsmittelzusammensetzung ist von Vorteil, da hierdurch die flüssigen Einzelzutaten der Nahrungsmittelzusammensetzung abbindbar sind, so dass ein dreidimensionales Gelnetzwerk ausbildbar ist. Als Geliermittel werden bevorzugt Polysaccharide aus der Gruppe Pektine, Agar, Alginate, Carragen, Johannisbrotkernmehl, Guarkernmehl, Tragant, Xanthan, Gummiarabicum, Alkylcellulose, Hydroxyalkylcellulose, Carboxyalkylcellulose, Stärke, modifizierte Stärke, wie beispielsweise Dextrin, und/oder einer Mischung hieraus ausgewählt.

Derartige Geliermittel sind von Vorteil, da sie in Gegenwart von Flüssigkeit quellen und in Gegenwart von Säure und Zucker eine Gelierung bedingen. Unter Ausbildung einer gallertartigen Masse erfolgt die Abbindung der Nahrungsmittelzusammensetzung zu einem Nahrungsmittel. Meist bevorzugt werden als Geliermittel Pektine eingesetzt, welche als hoch- und/oder niederveresterte Pektine und/oder amidierte Pektine ausgebildet sind.

Darüber hinaus sind neben den Polysacchariden auch tierische und/oder pflanzliche Proteine als Geliermittel denkbar, wie beispielsweise Gelatine.

Bei einer weiteren vorteilhaften Ausführungsform ist die Säure in einem Bereich von 0,3 - 1,5 Gewichts-%, mehr bevorzugt in einem Bereich von 0,15- 1,0 Gewichts-%, bezogen auf die Gesamtmasse der Nahrungsmittelzusammensetzung, ausgewählt, wobei die Säure bevorzugt aus der Gruppe der Mono-, Bi- oder Tricarbonsäuren, und meist bevorzugt als Zitronensäure, ausgewählt ist. Selbstverständlich ist die Verwendung nicht auf nur eine Säure beschränkt, sondern es ist denkbar, auch mehrere Säuren als Säuremischung der Nahrungsmittelzusammensetzung beizumengen. Die Zugabe von Säure ist insbesondere vorteilhaft, da diese zur Einstellung des pH-Werts der Nahrungsmittelzusammensetzung dient. Ein saurer pH-Wert wirkt stark begünstigend auf die Gelierung und die Ausbildung eines dreidimensionalen Gelnetzwerks.

Bei einer weiteren vorteilhaften Ausführungsform umfasst die Nahrungsmittelzusammensetzung weiterhin 0,01 - 1,5 Gewichts-%, bevorzugt 0,05 Gewichts-%, bis 1,0 Gewichts-%, mehr bevorzugt 0,1 bis 0,3 Gewichts-%, bezogen auf die Gesamtmasse der Nahrungsmittelzusammensetzen, Aroma, wobei das Aroma als synthetisches Aroma und/oder natürliches Aroma auswählbar ist. Dies ist vorteilhaft, da durch die Zugabe von Aroma die Nahrungsmittelzusammensetzung sowohl einen spezifischen Geruch und/oder einen spezifischen Geschmack erhält. Im vorliegenden Fall sind unter Aroma sowohl Aromastoffe als auch Aromaextrakte zu verstehen. Bevorzugt handelt es sich bei Aromaextrakten um natürliche Aromastoffe, beispielsweise aus Früchten. Bevorzugt werden vorliegend natürliche Aromen verwendet, welche zu mindestens 50 %, bevorzugt mindestens 65 %, meist bevorzugt mindestens 85 %, aus Früchten und/oder Fruchtbestandteilen gewonnen werden. Meist bevorzugt wird ein natürliches Aroma auf Ölbasis verwendet, mehr bevorzugt Zitrusschalenöl, meist bevorzugt Orangenschalenöl. Darüber hinaus sind auch andere Aromen, wie beispielsweise Kokosaroma, Pistazienaroma, Nussaroma, Schokoladenaroma, Butteraroma, Alkoholaroma oder dergleichen denkbar.

Bei einer weiteren vorteilhaften Ausführungsform umfasst die Nahrungsmittelzusammensetzung weiterhin Stückgut im Bereich 0,01 - 60 Gewichts-%, bevorzugt im Bereich 0,5 - 40 Gewichts-%, mehr bevorzugt im Bereich von 1,0-20 Gewichts-% und meist bevorzugt im Bereich von 5,0 - 10 Gewichts-%, bezogen auf die Gesamtmasse der Nahrungsmittelzusammensetzung, wobei das Stückgut bevorzugt als Obststückgut, kakaohaltiges Stückgut, nusshaltiges Stückgut und/oder zuckerhaltiges Stückgut und/oder einer Mischung hieraus ausgewählt ist. Die Zugabe von Stückgut zu der Nahrungsmittelzusammensetzung erweist sich als vorteilhaft, da hierdurch der Geschmack der Nahrungsmittelzusammensetzung sowie deren Konsistenz im abgebundenen Zustand zusätzlich verbessert werden. Das Stückgut bedingt eine weitere Unterbrechung des dreidimensionalen Gelnetzwerkes und wird bevorzugt in dieses formstabil eingelagert. Durch die Zugabe von bevorzugt obsthaltigem Stückgut, wie beispielsweise Orangen-, Zitronenstücke und/oder -zesten, erhält die Nahrungsmittelzusammensetzung neben ihrer moussartigen, lockeren Konsistenz einen weiteren Geschmacksträger. Zudem erweist sich das Stückgut als vorteilhaft, da dieses von der Konsistenz her gesehen, fester ausgebildet ist, als die Nahrungsmittelzusammensetzung, sodass der Konsument bei einem Biss in die abgebundene Nahrungsmittelzusammensetzung sowohl deren mousseartige Konsistenz als auch ein starkes Fruchtgefühl durch tatsächlich vorhandene Fruchtstücke erlebt. Selbstverständlich ist die Verwendung von Stückgut nicht auf den Obstbereich beschränkt, sodass auch kakaohaltiges Stückgut, bevorzugt Schokolade, nusshaltiges Stückgut, bevorzugt Haselnüsse, Kokosflocken oder Walnüsse, sowie zuckerhaltiges Stückgut, wie bevorzugt Karamell, oder einer Mischung aus dem aufgezählten Stückgut, der Nahrungsmittelzusammensetzung beigemengt werden können. Hierdurch ergeben sich für den Konsumenten völlig neue Geschmackserlebnisse.

Ferner ist denkbar, dass die Nahrungsmittelzusammensetzung zusätzlich wenigstens ein Vitamin, bevorzugt Vitamin C, umfasst. Dies ist insbesondere für die Gesundheit der Konsumenten von Vorteil.

Darüber hinaus umfasst die vorliegende Erfindung auch eine Backware nach Anspruch 12.

In einer weiteren vorteilhaften Ausführungsform ist die Backware mit Schokolade veredelt und weist bevorzugt die Nahrungsmittelzusammensetzung als Nahrungsmittelkissen und/oder Füllung auf und weist unterhalb der Füllung und/oder unterhalb des Nahrungsmittelkissens das Gebäck auf und ist oberhalb der Füllung und/oder des Nahrungsmittelkissens mit Schokolade überzogen. Diese besondere Backware macht von den Vorteilen der Nahrungsmittelzusammensetzung Gebrauch, indem sie diese mit einem Eigebäck und einem Schokoladenüberzug verbindet. Dies ist vorteilhaft, da sich eine solche Backware leicht in mundgroßen oder snackgroßen Stücken verarbeiten lässt und gerne für Kaffeekränzchen oder zwischendurch Verwendung finden kann. Dabei ist denkbar, dass eine solche Backware eine runde Form aufweist. Dies ist vorteilhaft aufgrund der größeren Handlichkeit. Es ist jedoch nicht darauf beschränkt. So sind auch reckteckige, quaderförmige oder andere Ausbildungen der Backware vorstellbar. Vorteilhaft dehnt sich das Gebäck zur Mitte der Backware hin stetig zu einer größten Ausdehnung aus und läuft zum anderen Ende der Backware wieder zusammen. Dies bedingt eine leichte Einführung in den Mund eines Menschen. Die Umrahmung aus Gebäck und Schokoladenüberzug stellt einen Schutz für die Nahrungsmittelzusammensetzung dar, sodass die Backware leicht für den Verkauf verpackt werden und in größerer Stückzahl verkauft werden kann.

Darüber hinaus umfasst die vorliegende Erfindung auch ein Verfahren zur Herstellung einer Nahrungsmittelzusammensetzung, wenigstens die folgenden Schritte umfassend:
a. Bereitstellung der Einzelzutaten Süßungsmittel, Sirup, Saftkonzentrat, Geliermittel, Wasser, Säure, Aroma und Pflanzenfaser;
b. Abwiegen der Einzelzutaten;
c. Mischung der Einzelzutaten;
d. Kochen der Einzelzutaten;
e. Vakuumieren der gekochten Einzelzutaten; und
f. Einfüllung in ein Vorratsbehältnis zur Weiterverarbeitung

Ferner umfasst die vorliegende Erfindung auch eine Verwendung des Nahrungsmittels nach einem der Ansprüche 1 bis 9 zur Haftverbindung von Gebäcken und/oder Überzugen.

Vorteilhafte Zweckmäßigkeiten sind der nachfolgenden Beschreibung in Verbindung mit der Zeichnung zu entnehmen. Hierbei zeigen:
- Fig. 1: ein Fließschema zur Herstellung der Nahrungsmittelzusammensetzung;
- Fig. 2: ein schematischer Querschnitt einer abgebundenen Nahrungsmittelzusammensetzung;
- Fig. 3: eine Backware mit der Nahrungsmittelzusammensetzung; und
- Fig. 4: eine schematische Schnittansicht auf ein erfindungsgemäßes Nahrungsmittel.

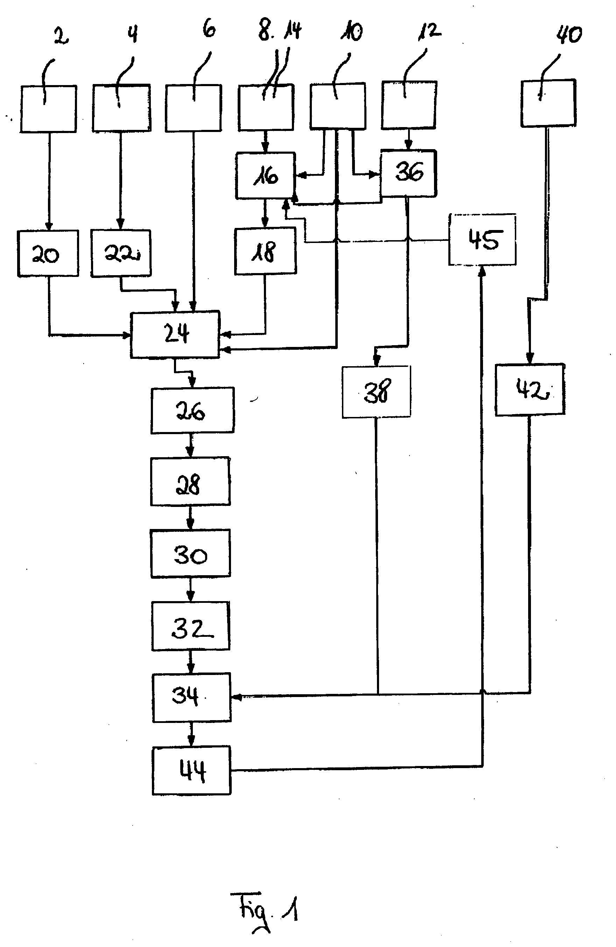

In Fig. 1 ist ein schematisches Fließschema gezeigt. In einem ersten Verfahrensschritt werden Fruchtflüssigkeit 2, bevorzugt Orangensaftkonzentrat, Süßungsmittel 4, bevorzugt Kristallzucker, Sirup 6, bevorzugt Fructose-Glucose-Sirup, Geliermittel 8, bevorzugt Pektin, Wasser 10, Säure 12, bevorzugt Zitronensäure, und Pflanzenfaser 14, bevorzugt Zitrusfaser, bereitgestellt. Zur besseren Verarbeitung wird in einem Vorschritt das Geliermittel 8 mit der Pflanzenfaser 14 gemischt und in einem Auflösebehälter 16 mit Wasser 10 gelöst, um in einen ersten Vorratsbehälter 18 für die Weiterverarbeitung bereitgestellt zu werden.

Süßungsmittel 4 und Fruchtflüssigkeit 2, bevorzugt Saftkonzentrat, meist bevorzugt Orangensaftkonzentrat, werden in einen jeweiligen Vorratsbehälter 20, 22 für die Weiterverarbeitung bereitgestellt.

In einem anschließenden Verfahrensschritt werden Fruchtflüssigkeit 2, Süßungsmittel 4, Sirup 6, die flüssige Lösung aus Geliermittel 8 und Pflanzenfaser 14 sowie der zusätzlich nötige Anteil an Wasser 10 in einem Wiegebehälter 24 nach der entsprechenden Rezeptvorgabe abgewogen.

In einem weiteren Verfahrensschritt werden die abgewogenen Einzelzutaten in einem Mischbehälter 26 miteinander vermengt, sodass sich bevorzugt eine homogene wässrige Lösung bedingt.

In einem daran anschließenden Verfahrensschritt wird die Mischung aus Einzelzutaten in einem Erhitzungsbehältnis 28 erhitzt. Bevorzugt wird während des Kochens die Nahrungsmittelzusammensetzung 1 gerührt, sodass ein gleichmäßiges Erhitzen gewährleistet ist. Dies ist vorteilhaft, da hierdurch mögliche Keime abgetötet werden.

Im Anschluss wird die noch heiße Nahrungsmittelzusammensetzung in eine Vakuumieranlage 30 eingebracht und mit Unterdruck beaufschlagt. Dies ist vorteilhaft, da durch Sauerstoffentzug eine Weiterreaktion der Gelnetzwerkausbildung unterbrochen wird. Zudem ist das Vakuumieren vorteilhaft, da durch die Sauerstoffentfernung die Haltbarkeit und/oder die Lagerfähigkeit der hergestellten Nahrungsmittelzusammensetzung deutlich verbessert wird.

In einem weiteren Verfahrensschritt wird die bisher hergestellte Nahrungsmittelzusammensetzung in einem Vorratsbehälter 32 gesammelt. Aus diesem weiteren Vorratsbehälter 32 erfolgt die Zuführung der Nahrungsmittelzusammensetzung zur Weiterverarbeitung beispielsweise auf einem Plattenband 34, wobei bevorzugt während dieses Zuführschrittes der Nahrungsmittelzusammensetzung zusätzlich in einem Auflösebehälter 36 gelöste und in einem Wiegebehälter 38 abgewogene Säure 12 sowie vorher in einem weiteren Wiegebehälter 42 abgewogenes Aroma 40 zugeführt werden, um während der direkt anstehenden Verarbeitung der Nahrungsmittelzusammensetzung deren Abbindung und Gelierung zu starten. Durch Säurezugabe wird der Gelierungsprozess ausgelöst und die Ausbildung eines zumindest teilweisen dreidimensionalen Gelnetzwerks bedingt.

Ferner ist denkbar, noch nicht abgebundene Nahrungsmittelzusammensetzung wieder als Rework 45 dem Kreislauf zuzuführen.

Im Anschluss daran erfolgt der tatsächliche Verarbeitungsprozess der Nahrungsmittelzusammensetzung, welche nach der Portionierung bevorzugt durch wenigstens eine Kühlanlage (nicht gezeigt) läuft. Während dieser Kühlphase erfolgt das Abbinden und Aushärten des Gelnetzwerks, so dass im Anschluss daran ein formstabiles Nahrungsmittelkissen ausgebildet ist. Dies ist vorteilhaft, da hierdurch die flüssige Nahrungsmittelzusammensetzung in beliebiger geometrischer Form auf das Kühlband aufbringbar ist und so beispielsweise bevorzugt als Nahrungsmittelkissen abbindbar ist.

Selbstverständlich ist darüber hinaus denkbar, die vorliegende Nahrungsmittelzusammensetzung pur zu verzehren oder auch mit einer kakaohaltigen und/oder zuckerhaltigen Beschichtung vorzusehen. Darüber hinaus wäre auch denkbar, die vorliegende Nahrungsmittelzusammensetzung als Topping und/oder als Füllung einer Süßware, einer Backware, eines Gebäckstücks oder dergleichen zu verwenden.

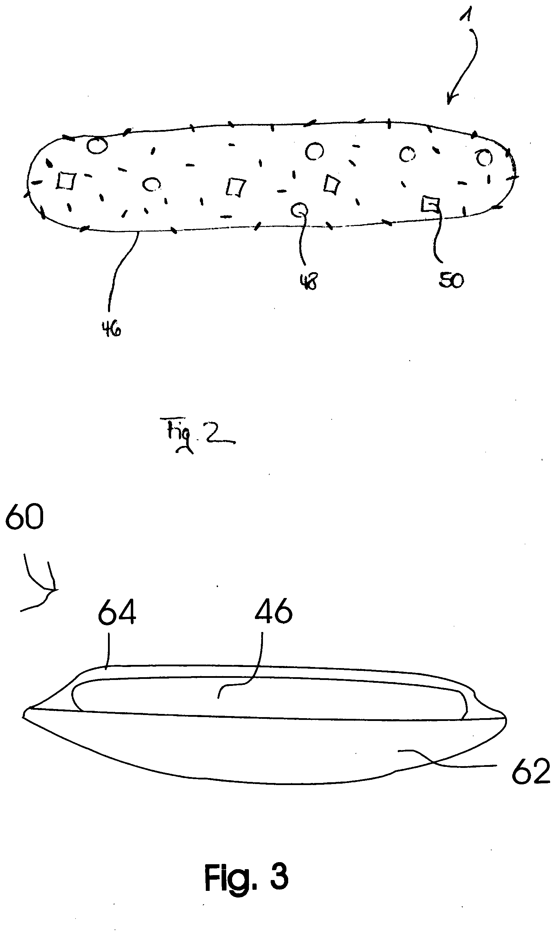

Fig. 2 zeigt einen schematischen Querschnitt einer abgebundenen Nahrungsmittelzusammensetzung 1, deren ausgebildetes Gelnetzwerk der Einfachheit halber nicht gezeigt ist. Die abgebundene Nahrungsmittelzusammensetzung 1 ist bevorzugt als Nahrungsmittelkissen 46 ausgebildet. Im Querschnitt sind sowohl die Pflanzenfasern 14 als auch beispielhaft beigemengtes Stückgut 48 und 50 gezeigt. Die Größe und die Form des Stückgutes 48, 50 ist variabel ausbildbar, bevorzugt derart, dass das Stückgut weiterhin in das ausgebildete Gelnetzwerk einlagerbar ist und die abgebundene Nahrungsmittelzusammensetzung 1 formstabil ausgebildet ist.

Fig. 3 zeigt eine Backware 60 mit der Nahrungsmittelzusammensetzung 1. Die Backware 60 umfasst dabei ein Gebäck 62, ein Nahrungsmittelkissen 46, das aus der Nahrungsmittelzusammensetzung 1 zusammengesetzt ist sowie einen Überzug aus Schokolade 64. Die Abbildung ist ein Querschnitt durch die Backware 60. Das Gebäck 62 ist in dieser Ausführungsform auf der Unterseite der Backware 60 angeordnet. Sie weist eine glatte horizontale Oberfläche auf. An der Unterseite hat das Gebäck 62 in der Mitte eine größte Dicke. Die Dicke nimmt von den beiden Enden bis zur Mitte zu und läuft an den beiden Enden beinahe vollständig zu einer Spitze oder einer abgerundeten Spitze zusammen. Die Nahrungsmittelzusammensetzung 1 ist darüber als ein Nahrungsmittelkissen 46 angeordnet. Über der ebenen horizontalen Oberfläche des Gebäcks Eigebäcks, 62 ist die Nahrungsmittelzusammensetzung 1 mit im Wesentlichen konstanter Dicke angeordnet, die vorteilhaft etwas kleiner als die maximale Dicke des Gebäcks 62 ist. Das Nahrungsmittelkissen 46 ist in seiner seitlichen Ausdehnung etwas kleiner als die seitliche Ausdehnung des Gebäcks 62. An den Rändern weist sie kissenförmig einen abgerundeten Verlauf auf. Darüber ist eine Glasur oder ein Überzug aus Schokolade 64 angeordnet. Es ist denkbar, dass die Backware 60 von oben betrachtet eine im Wesentlichen runde Form aufweist. Sie ist jedoch nicht darauf beschränkt.

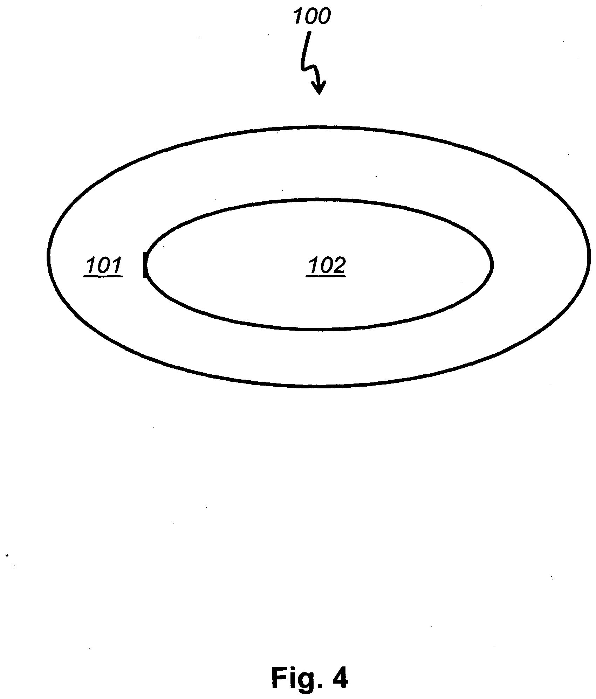

Fig. 4 zeigt eine schematische Schnittansicht auf ein als Nahrungsmittelkissen (46) ausgebildetes Nahrungsmittel (100), in dem ein erster Bereich (101) einen weiteren Bereich (102) zumindest von vier Seiten, bevorzugt allseitig umschließt.

### Bezugszeichenliste

- 1: Nahrungsmittelzusammensetzung
- 2: Fruchtflüssigkeit
- 4: Süßungsmittel
- 6: Sirup
- 8: Gelierungsmittel
- 10: Wasser
- 12: Säure
- 14: Pflanzenfaser
- 16, 36: Auflösebehälter
- 18, 20, 22, 32: Vorratsbehälter
- 24, 38, 42: Wiegebehälter
- 26: Mischbehälter
- 28: Temperierbehälter
- 30: Vakuumieranlage
- 34: Plattenband
- 40: Aroma
- 45: Rework
- 46: Nahrungsmittelkissen
- 48, 50: Stückgut
- 60: Backware
- 62: Gebäck
- 64: Schokolade
- 100: Nahrungsmittel
- 101: erster Bereich
- 102: weiterer Bereich

## Patentansprüche

1. Nahrungsmittel (100) mit gelartigen Eigenschaften aus zumindest einer Nahrungsmittelzusammensetzung (1) umfassend wenigstens folgende Rohstoffe:
a. wenigstens ein Lösungsmittel (10),
b. wenigstens ein Hydrokolloid (8),
c. wenigstens eine Pflanzenfaser (14), wobei wenigstens eine Pflanzenfaser (14) eine Einzelzutat der Nahrungsmittelzusammensetzung (1) darstellt,
**dadurch gekennzeichnet, dass**
das Nahrungsmittel (100) als Nahrungsmittelkissen (46) ausgebildet ist und
d. das Lösungsmittel (10) einen Anteil von 15 - 30 Gewichts-% bezogen auf die Gesamtmasse der Nahrungsmittelzusammensetzung (1) aufweist und eine wasserhaltige, ölhaltige und/oder alkoholhaltige Flüssigkeit ist,
e. das Hydrokolloid (8) einen Anteil von 0,01 - 12.0 Gewichts-% bezogen auf die Gesamtmasse der Nahrungsmittelzusammensetzung (1) aufweist und das Hydrokolloid (8) ein natürliches und/oder modifiziertes Hydrokolloid (8) ist und ein Polysaccharid ist und
f. die Pflanzenfaser (14) einen Anteil von 0,01 - 5.0 Gewichts-% bezogen auf die Gesamtmasse der Nahrungsmittelzusammensetzung (1) aufweist und die Pflanzenfaser (14) ein natürliche und/oder modifizierte Pflanzenfaser (14) ist und aus der Gruppe Obstfasern ausgewählt ist.

2. Nahrungsmittel (100) nach wenigstens einem der vorangegangenen Ansprüche,
**dadurch gekennzeichnet, dass**
ein Quellgrad mit Lösungsmittel (10) wenigstens eines Hydrokolloides (8) und/oder wenigstens einer Pflanzenfaser (14) auf bevorzugt 8 - 25 Gewichts-% bezogen auf die jeweilige Trockenmasse definiert ist.

3. Nahrungsmittel (100) nach wenigstens einem der vorgenannten Ansprüche,
**dadurch gekennzeichnet, dass**
wenigstens eine Pflanzenfaser (14) als rieselfähiges Pulver, dessen Körnung bevorzugt im Bereich von 0,01 µm bis 5 mm ausgebildet ist, vorgesehen ist und/oder als Paste oder viskose Lösung bereitgestellt ist.

4. Nahrungsmittel (100) nach wenigstens einem der vorgenannten Ansprüche,
**dadurch gekennzeichnet, dass**
wenigstens eine Pflanzenfaser (14) geschmacks- und/oder geruchsneutral und/oder zusatzstofffrei ausgebildet ist.

5. Nahrungsmittel (100) nach wenigstens einem der vorangegangenen Ansprüche,
**dadurch gekennzeichnet, dass**
die Nahrungsmittelzusammensetzung (1) wenigstens einen der weiteren Rohstoffe umfasst:
a. wenigstens ein Süßungsmittel (4);
b. wenigstens einen Sirup (6);
c. wenigstens eine Fruchtflüssigkeit (2);
d. wenigstens ein Aroma (40);
e. wenigstens ein Stückgut (48; 50);
f. wenigstens eine Säure (12); und/oder
g. wenigstens ein Salz, insbesondere Salzkomplex.

6. Nahrungsmittel (100) nach Anspruch 5,
**dadurch gekennzeichnet, dass**
die Nahrungsmittelzusammensetzung (1) umfasst:
a. 10 - 45 Gewichts-%, bevorzugt 15 - 40 Gewichts-%, meist bevorzugt 25 - 30 Gewichts-%, Süßungsmittel (4);
b. 30 - 60 Gewichts-%, bevorzugt 35 - 60 Gewichts-%, mehr bevorzugt 40 - 50 Gewichts-%, Sirup (6);
c. 1,0 - 10 Gewichts-%, bevorzugt 1,0 - 7,0 Gewichts-%, mehr 2,0 - 5,0 Gewichts-%, Fruchtflüssigkeit (2);
d. 0,01 - 1,5 Gewichts-%, bevorzugt 0,05 Gewichts-%, bis 1,0 Gewichts-%, mehr bevorzugt 0,1 bis 0,3 Gewichts-%, Aroma (40);
e. 0,01 - 60 Gewichts-%, bevorzugt 0,5 - 40 Gewichts-%, mehr bevorzugt 1,0 - 20 Gewichts-% und meist bevorzugt 5,0 - 10 Gewichts-% Stückgut (48, 50);
f. 0,1 - 5,0 Gewichts-% , bevorzugt 0,3 - Gewichts-%, mehr bevorzugt 0,5 -1,0 Gewichts-%, Säure (12); und/oder
g. 0,05 - 3,0 Gewichts-%, bevorzugt 0,075 - 2,5 Gewichts-%, noch bevorzugter 0,075 - 1,5 Gewichts-%, noch 1,1 - 1,3 Gewichts-% Salz bezogen auf die Gesamtmasse der Nahrungsmittelzusammensetzung.

7. Nahrungsmittel (100) nach Anspruch 5 oder 6,
**dadurch gekennzeichnet, dass**
a. wenigstens ein Süßungsmittel (4) aus der Gruppe der Süßstoffe oder Saccharide, bevorzugt Monosaccharide und/oder Disaccharide, mehr bevorzugt Glucose, Saccharose, Fructose, und/oder einer Mischung hieraus ausgewählt ist;
b. wenigstens eine Sirup (6) aus natürlichen und/oder künstlichen Siruparten, bevorzugt Glucose-Fructose-Sirup, Honig, Ahornsirup, Reissirup und/oder eine Mischung hieraus ausgewählt ist;
c. wenigstens eine Fruchtflüssigkeit (2) als Saftkonzentrat, bevorzugt als Obstsaftkonzentrat, mehr bevorzugt Orangensaftkonzentrat, Zitronensaftkonzentrat, Cranberrysaftkonzentrat, Pampelmusensaftkonzentrat, Grapefruitsaftkonzentrat und/oder eine Mischung hieraus ausgewählt ist;
d. wenigstens ein Aroma (40) als synthetisches Aroma und/oder natürliches Aroma ausgewählt ist;
e. wenigstens ein Stückgut (48; 50) bevorzugt als Obststückgut, Getreidestückgut, Gemüsestückgut, kakaohaltiges Stückgut, nusshaltiges Stückgut und/oder zuckerhaltiges Stückgut und/oder einer Mischung hieraus ausgewählt ist, und/oder wobei das wenigstens eine Stückgut (48; 50) frisch, konserviert, eingekocht, getrocknet und/oder gefriergetrocknet ist;
f. wenigstens eine Säure (12) aus der Gruppe der Mono-, Bi- oder Tricarbonsäuren, bevorzugt Citronensäure, ausgewählt ist;
g. wenigstens eine Salz ein Alkali- oder Erdalkalisalz, bevorzugt ein Calciumsalz, noch bevorzugter ein Calciumsalz-haltiger chemischer Komplex ist;
h. wenigstens ein Hydrokolloid (8) ein Polysaccharid, bevorzugt Stärke, ist; und/oder
i. wenigstens eine Pflanzenfaser (14) aus der Gruppe Obstfasern insbesondere aus Zitrusfrüchten, Gemüsefasern, Getreidefasern und/oder einer Kombination hieraus ausgewählt ist;

8. Nahrungsmittel (100) nach Anspruch 1,
**dadurch gekennzeichnet, dass**
das Nahrungsmittelkissen (46) in einem ersten Bereich (101) eine erste gelartige Struktur und in wenigstens einem weiteren Bereich (102) eine jeweilige weitere gelartige Struktur aufweist.

9. Nahrungsmittel (100) nach Anspruch 8,
**dadurch gekennzeichnet, dass**
wenigstens ein weiterer Bereich (102) von einem ersten Bereich (101) allseits umschlossen ist.

10. Verfahren zur Herstellung eines Nahrungsmittels (100) mit gelartigen Eigenschaften nach einem der Ansprüche 1 bis 9 aus wenigstens einer Nahrungsmittelzusammensetzung (1) wenigstens mit den folgenden Schritten:
a. Bereitstellen wenigstens die Rohstoffe zumindest der Nahrungsmittelzusammensetzung (1);
b. Abmessen der Rohstoffe;
c. Mischen der Rohstoffe;
d. Temperieren der gemischten Rohstoffe, insbesondere Erhitzen auf eine unterhalb oder oberhalb des Siedepunktes von in der Nahrungsmittelzusammensetzung (1) befindlichem Lösungsmittel (10), und/oder physikalisches Behandeln der gemischten Rohstoffe, insbesondere unter Überatmosphärendruck, vorzugsweise unter Hochdruck, der Rohstoffe und
e. Beenden des Temperierens und/oder des physikalischen Behandelns, so dass sich aus den temperierten und/oder physikalisch behandelten Rohstoffen ein Nahrungsmittel (10) mit gelartigen Eigenschaften ausbildet.

11. Verfahren nach Anspruch 10, wobei das Beenden des Temperierens und/oder des physikalischen Behandelns wenigstens einen der folgenden Unterschritte umfasst:
a. Erniedrigen des Drucks, insbesondere auf Atmosphärendruck, bevorzugt auf Unteratmosphärendruck, mehr bevorzugt Vakuumieren;
b. Abkühlen der Rohstoffe;
c. Einfüllen der Rohstoffe in ein Vorratsbehältnis, insbesondere in eine Form oder in ein weiteres, bevorzugt ebenfalls temperiertes und/oder physikalisch behandeltes, Nahrungsmittel (10) mit einer zur Ausbildung einer gemeinsamen gelartigen Struktur inkompatiblen gelartigen Struktur, so dass das Nahrungsmittel (10) vom weiteren Nahrungsmittel (100) zumindest teilweise umhüllt wird.

12. Backware (60) mit wenigstens einem Nahrungsmittel (100) nach einem der Ansprüche 1 bis 9 und mit wenigstens einem Gebäck (62), insbesondere einem Eigebäck, welches vorteilhafterweise durch eine softe und/oder mürbe Konsistenz und/oder einen süßen, gewürzten, aromatisierten und/oder salzigen Geschmack gekennzeichnet ist und/oder wenigstens einem Überzug (64),
**dadurch gekennzeichnet, dass**
der wenigstens eine Überzug (64) bevorzugt zumindest teilweise fettbasiert, bindemittelbasiert, gewürzbasiert und/oder zuckerbasiert, mehr bevorzugt schokoladenhaltig, nussthaltig und/oder karamellhaltig ist.

13. Backware (60) nach Anspruch 12,
**dadurch gekennzeichnet, dass**
wenigstens ein Nahrungsmittel (100) von einer Anzahl von Seiten, bevorzugt einer, zwei oder allen Seiten, von wenigstens einem Gebäck (62) und/oder wenigstens einem Überzug (64) umgeben ist.

14. Verwendung eines Nahrungsmittels (100) nach einem der Ansprüche 1 bis 9 zur Haftverbindung von Gebäcken (62) und/oder Überzügen (64).

## Claims

1. A food product (100) with gel-like properties consisting of at least one food composition (1) comprising at least the following raw materials:
a) at least one solvent (10),
b) at least one hydrocolloid (8),
c) at least one plant fibre (14), wherein at least one plant fibre (14) is a single ingredient of the food composition (1),
**characterised in that**
the food product (100) is formed in the shape of a food cushion(46), and
d) the solvent (10) has a proportion of 15 - 30 % by weight relative the total mass of the food composition (1) and is a water-containing, oil-containing and/or alcohol-containing liquid,
e) the hydrocolloid (8) has a proportion of 0.01 - 12.0 % by weight based on the total mass of the food composition (1) and the hydrocolloid (8) is a natural and/or modified hydrocolloid (8) and is a polysaccharide, and
f) the plant fibre (14) has a proportion of 0.01 - 5.0 % by weight relative to the total mass of the food composition (1) and the plant fibre (14) is a natural and/or modified plant fibre (14) and is selected from the group of fruit fibres.

2. The food product (100) as claimed in at least one of the preceding claims,
**characterized in that**
a degree of swelling with solvent (10) of at least one hydrocolloid (8) and/or at least one plant fibre (14) is defined as preferably 8 - 25 % by weight relative to the respective dry matter.

3. The food product (100) as claimed in at least one of the preceding claims,
**characterised in that**
at least one plant fibre (14) is provided as a free-flowing powder, the grain size of which is preferably in the range from 0.01 µm to 5 mm, and/or is provided as a paste or a viscous solution.

4. The food product (100) as claimed in at least one of the preceding claims,
**characterised in that**
at least one plant fibre (14) is neutral in taste and/or odour and/or free of additives.

5. The food product (100) as claimed in at least one of the preceding claims,
**characterized in that**
the food composition (1) further comprises at least one of the following raw materials:
a) at least one sweetener (4);
b) at least one syrup (6);
c) at least one fruit liquid (2);
d) at least one flavouring (40);
e) at least one bulk good (48; 50);
f) at least one acid (12); and/or
g) at least one salt, in particular a salt complex.

6. The food product (100) as claimed in claim 5, **characterized in that**
the food composition (1) comprises:
a) 10 - 45 % by weight, preferably 15 - 40 % by weight, most preferably 25 - 30 % by weight, of sweetener (4) ;
b) 30 - 60 % by weight, preferably 35 - 60 % by weight, more preferably 40 - 50 % by weight, of syrup (6);
c) 1.0 - 10 % by weight, preferably 1.0 - 7.0 % by weight, more preferably 2.0 - 5.0 % by weight, of fruit liquid (2);
d) 0.01 - 1.5 % by weight, preferably 0.05 % by weight to 1.0 % by weight, more preferably 0.1 to 0.3 % by weight, of flavouring {40};
e) 0.01 - 60 % by weight, preferably 0.5 - 40 % by weight, more preferably 1.0 - 20 % by weight and most preferably 5.0 - 10 % by weight of bulk goods (48, 50);
f) 0.1 - 5.0 % by weight, preferably 0.3 - [sic] % by weight, more preferably 0.5 -1.0 % by weight of acid (12); and/or
g) 0.05 - 3.0 % by weight, preferably 0.075 - 2.5 % by weight, more preferably 0.075 - 1.5 % by weight, still more preferably 1.1 - 1.3 % by weight of salt based on the total mass of the food composition.

7. The food product (100) as claimed in claim 5 or 6, **characterized in that**
a) at least one sweetener (4) is selected from the group of sweeteners or saccharides, preferably monosaccharides and/or disaccharides, more preferably glucose, sucrose, fructose and/or a mixture thereof;
b) at least one syrup (6) is selected from natural and/or artificial syrups, preferably glucose-fructose syrup, honey, maple syrup, rice syrup and/or a mixture thereof;
c) at least one fruit liquid (2) is selected as juice concentrate, preferably as fruit juice concentrate, more preferably orange juice concentrate, lemon juice concentrate, cranberry juice concentrate, grapefruit juice concentrate, pomelo juice concentrate and/or a mixture thereof;
d) at least one flavouring (40) is selected as a synthetic flavouring and/or a natural flavouring;
e) at least one bulk good (48; 50) is preferably selected as a fruit bulk good, cereal bulk good, vegetable bulk good, cocoa-containing bulk good, nut-containing bulk good and/or sugar-containing bulk good and/or a mixture thereof, and/or wherein the at least one bulk good (48; 50) is fresh, preserved, cooked, dried and/or freeze-dried;
f) at least one acid (12) is selected from the group of mono-, bi- or tricarboxylic acids, preferably citric acid;
g) at least one salt is an alkali or alkaline earth salt, preferably a calcium salt, more preferably a calcium salt-containing chemical complex;
h) at least one hydrocolloid (8) is a polysaccharide, preferably starch; and/or
i) at least one plant fibre (14) is selected from the group consisting of fruit fibres, in particular from citrus fruits, vegetable fibres, cereal fibres and/or a combination thereof.

8. The food product (100) as claimed in claim 1, **characterized in that**
the food cushion (46) comprises a first gel-like structure in a first region (101) and a respective further gel-like structure in at least one further region (102).

9. The food product(100) as claimed in claim 8, **characterised in that**
at least one further region (102) is enclosed on all sides by a first region (101).

10. A method of producing a food product (100) with gel-like properties as claimed in any one of claims 1 to 9 from at least one food composition (1), comprising at least the following steps:
a) providing at least the raw materials of at least the food composition (1);
b) measuring the raw materials;
c) mixing the raw materials;
d) tempering the mixed raw materials, in particular heating them to a temperature below or above the boiling point of solvent (10) present in the food composition (1), and/or physically treating the mixed raw materials, in particular under sub atmospheric pressure, preferably under high pressure, of the raw materials; and
e) terminating the tempering and/or physical treatment so that a food product (10) with gel-like properties is formed from the tempered and/or physically treated raw materials.

11. The method as claimed in claim 10, wherein terminating the tempering and/or physical treatment comprises at least one of the following sub-steps:
a) lowering the pressure, in particular to atmospheric pressure, preferably to sub-atmospheric pressure, more preferably vacuuming;
b) cooling the raw materials;
c) placing the raw materials in a storage container, in particular in a mould or in a further, preferably also tempered and/or physically treated, food product (10) having a gel-like structure that is incompatible with the formation of a common gel-like structure, so that the food product (10) is at least partially enveloped by the further food product (100).

12. Baked goods (60) with at least one food product (100) as claimed in any one of claims 1 to 9 and with at least one pastry (62), in particular an egg based pastry, which is preferably **characterised by** a soft and/or crumbly consistency and/or a sweet, seasoned, flavoured and/or salty taste and/or at least one coating (64),
**characterised in that**
the at least one coating (64) is preferably at least partially fat-based, binder-based, seasoning-based and/or sugar-based, more preferably chocolate-containing, nut-containing and/or caramel-containing.

13. The baked goods (60) as claimed in claim 12,
**characterized in that**
at least one food product (100) is surrounded on a number of sides, preferably one, two or all sides, by at least one pastry (62) and/or at least one coating (64).

14. Use of a food product (100) as claimed in any one of claims 1 to 9 for adhesive bonding of pastries (62) and/or coatings (64).

## Revendications

1. Aliment (100) ayant des propriétés de type gel à partir d'au moins une composition alimentaire (1) comprenant au moins les matières premières suivantes :
a. au moins un solvant (10),
b. au moins un hydrocolloïde (8),
c. au moins une fibre végétale (14), la au moins une fibre végétale (14) représentant un ingrédient individuel de la composition alimentaire (1),
**caractérisé en ce que**
l'aliment (100) est conçu sous forme de cubes alimentaires (46) et
d. le solvant (10) représente une proportion de 15 à 30 % en poids par rapport à la masse totale de la composition alimentaire (1) et est un liquide contenant de l'eau, de l'huile et/ou de l'alcool,
e. l'hydrocolloïde (8) représente une proportion de 0,01 à 12,0 % en poids par rapport à la masse totale de la composition alimentaire (1) et l'hydrocolloïde (8) est un hydrocolloïde (8) naturel et/ou modifié et est un polysaccharide et
f. la fibre végétale (14) représente une proportion de 0,01 à 5,0 % en poids par rapport à la masse totale de la composition alimentaire (1) et la fibre végétale (14) est une fibre végétale naturelle et/ou modifiée (14) et est choisie dans le groupe des fibres de fruits.

2. Aliment (100) selon au moins l'une des revendications précédentes, **caractérisé en ce que**
un degré de gonflement avec le solvant (10) d'au moins un hydrocolloïde (8) et/ou d'au moins une fibre végétale (14) est défini à de préférence 8 à 25 % en poids par rapport à la matière sèche en question.

3. Aliment (100) selon au moins l'une des revendications précédentes, **caractérisé en ce que**
au moins une fibre végétale (14) est comprise sous forme de poudre coulante, dont la granulométrie est conçue de préférence dans la plage de 0,01 µm à 5 mm, et/ou est fournie sous forme de pâte ou de solution visqueuse.

4. Aliment (100) selon au moins l'une des revendications précédentes, **caractérisé en ce que**
au moins une fibre végétale (14) est conçue sous forme neutre au goût et/ou à l'odeur, et/ou sans additif.

5. Aliment (100) selon au moins l'une des revendications précédentes, **caractérisé en ce que**
la composition alimentaire (1) comprend au moins l'une des autres matières premières :
a. au moins un agent édulcorant (4) ;
b. au moins un sirop (6) ;
c. au moins un liquide de fruit (2) ;
d. au moins un arôme (40) ;
e. au moins un produit (48 ; 50) ;
f. au moins un acide (12) ; et/ou
g. au moins un sel, en particulier un complexe de sel.

6. Aliment (100) selon la revendication 5,
**caractérisé en ce que**
la composition alimentaire (1) comprend :
a. 10 à 45 % en poids, de préférence 15 à 40 % en poids, de manière la mieux préférée 25 à 30 % en poids d'agent édulcorant (4) ;
b. 30 à 60 % en poids, de préférence 35 à 60 % en poids, de manière davantage préférée 40 à 50 % en poids de sirop (6) ;
c. 1,0 à 10% en poids, de préférence 1,0 à 7,0% en poids, de manière davantage préférée 2,0 à 5,0 % en poids de liquide de fruit (2) ;
d. 0,01 à 1,5 % en poids, de préférence 0,05 % en poids à 1,0 % en poids, de manière davantage préférée 0,1 à 0,3 % en poids d'arôme (40) ;
e. 0,01 à 60 % en poids, de préférence 0,5 % en poids à 40 % en poids, de manière davantage préférée 1,0 à 20 % en poids, et de manière la mieux préférée 5,0 à 10 % en poids de produit (48, 50) ;
f. 0,1 à 5,0 % en poids, de préférence 0,3 % en poids, de manière davantage préférée 0,5 à 1,0 % en poids d'acide (12) ; et/ou
g. 0,05 à 3,0 % en poids, de préférence 0,075 % en poids à 2,5 % en poids, plus préférentiellement 0,075 à 1,5% en poids, encore plus préférentiellement 1,1 à 1,3 % en poids de sel
par rapport à la masse totale de la composition alimentaire.

7. Aliment (100) selon la revendication 5 ou 6,
**caractérisé en ce que**
a. au moins un agent édulcorant (4) est choisi dans le groupe des édulcorants ou des saccharides, de préférence des monosaccharides et/ou disaccharides, de manière davantage préférée du glucose, saccharose, fructose et/ou d'un mélange de ceux-ci ;
b. au moins un sirop (6) est choisi parmi les types de sirops naturels et/ou artificiels, de préférence le sirop de glucose-fructose, le miel, le sirop d'érable, le sirop de riz et/ou un mélange de ceux-ci ;
c. au moins un liquide de fruit (2) est choisi sous forme de concentré de jus, de préférence concentré de jus de fruits, de manière davantage préférée concentré de jus d'orange, concentré de jus de citron, concentré de jus de canneberge, concentré de jus de pomelo, concentré de jus de pamplemousse et/ou d'un mélange de ceux-ci ;
d. au moins un arôme (40) est choisi sous forme d'arôme synthétique et/ou d'arôme naturel ;
e. au moins un produit (48 ; 50) est choisi de préférence en tant que produit de fruits, produit de céréales, produit de légumes, produit contenant du cacao, produit contenant des noix et/ou produit contenant du sucre et/ou d'un mélange de ceux-ci, et/ou dans lequel le au moins un produit (48 ; 50) est frais, conservé, bouilli, séché et/ou lyophilisé ;
f. au moins un acide (12) est choisi dans le groupe des acides mono-, bi- ou tricarboxyliques, de préférence l'acide citrique ;
g. au moins un sel est un sel d'alcalin ou d'alcalino-terreux, de préférence un sel de calcium, de manière encore mieux préférée un complexe chimique contenant un sel de calcium ;
h. au moins un hydrocolloïde (8) est un polysaccharide, de préférence de l'amidon ; et/ou
i. au moins une fibre végétale (14) est choisie dans le groupe des fibres de fruits, en particulier parmi des agrumes, des fibres de légumes, des fibres de céréales et/ou d'une combinaison de ceux-ci.

8. Aliment (100) selon la revendication 1,
**caractérisé en ce que** le cube alimentaire (46) présente dans une première zone (101) une première structure de type gel et dans au moins une autre zone (102) une autre structure de type gel respective.

9. Aliment (100) selon la revendication 8,
**caractérisé en ce qu'**une autre zone (102) est entourée de toute part par une première zone (101).

10. Procédé de fabrication d'un aliment (100) avec des propriétés de type gel selon l'une des revendications 1 à 9 à partir d'au moins
une composition alimentaire (1), avec au moins les étapes suivantes consistant à :
a. fournir au moins les matières premières d'au moins la composition alimentaire (1) ;
b. doser les matières premières ;
c. mélanger les matières premières ;
d. étuver les matières premières mélangées, en particulier chauffer à une température inférieure ou supérieure au point d'ébullition du solvant (10) se trouvant dans la composition alimentaire (1) et/ou traiter physiquement les matières premières mélangées, en particulier sous surpression atmosphérique, de préférence sous haute pression, des matières premières et
e. terminer l'étuvage et/ou le traitement physique de sorte qu'un aliment (10) avec des propriétés de type gel se forme à partir des matières premières étuvées et/ou traitées physiquement.

11. Procédé selon la revendication 10, dans lequel la terminaison de l'étuvage et/ou du traitement physique comprend au moins l'une des sous-étapes suivantes consistant à :
a. abaisser la pression, en particulier jusqu'à la pression atmosphérique, de préférence jusqu'à une pression inférieure à la pression atmosphérique, de manière davantage préférée mettre sous vide ;
b. refroidir les matières premières ;
c. remplir les matières premières dans un récipient de réserve, en particulier dans un moule ou dans un autre aliment (10), de préférence également étuvé et/ou traité physiquement, avec une structure de type gel incompatible avec la formation d'une structure de type gel commune de sorte que l'aliment (10) soit entouré au moins partiellement par l'autre aliment (100).

12. Produit de cuisson (60) avec au moins un aliment (100) selon l'une des revendications 1 à 9 et avec au moins un biscuit (62), en particulier un biscuit aux œufs, lequel est avantageusement **caractérisé par** une consistance molle et/ou tendre et/ou un goût sucré, épicé, aromatisé et/ou salé, et/ou au moins un enrobage (64),
**caractérisé en ce que**
le au moins un enrobage (64) est de préférence au moins partiellement à base de graisse, à base de liant, à base d'épices et/ou à base de sucres, de manière davantage préférée contient du chocolat, contient des noix et/ou contient du caramel.

13. Produit de cuisson (60) selon la revendication 12,
**caractérisé en ce que**
au moins un aliment (100) est entouré sur un certain nombre de faces, de préférence une, deux ou toutes les faces, par au moins un biscuit (62) et/ou au moins un enrobage (64).

14. Utilisation d'un aliment (100) selon au moins l'une des revendications 1 à 9 pour la liaison d'adhérence de produits de biscuits (62) et/ou d'enrobages (64).
